# EUROPÄISCHE PATENTANMELDUNG

(11) **EP 0 992 568 A2**
(43) Veröffentlichungstag der Anmeldung: **12.04.2000**
(21) Anmeldenummer: 99119041.4
(22) Anmeldetag: 29.09.1999
(51) Int. Cl.: C10G 70/06, B01D 3/20

(54) **Entfernung von CO2 und H2S aus dem Rohgas der Dampfcrackung**

(30) Priorität: 01.10.1998 DE 19845274
(71) Anmelder: BASF AKTIENGESELLSCHAFT, 67056 Ludwigshafen (DE)
(72) Erfinder: Laib, Heinrich, Dr., 67069 Ludwigshafen (DE); Jenne, Eric, Dr., 67454 Hassloch (DE); Veer, Viktor, 67454 Hassloch (DE); Kuehn, Heinz-Jürgen, 67593 Westhofen (DE); Kaiser, Wulf, Dr., 67098 Bad-Duerkheim (DE); Gerber, Bernd, 67069 Ludwigshafen (DE)
(74) Vertreter: Isenbruck, Günter, Dr.

(57) **Zusammenfassung**

Bei der Verwendung von Absorptionskolonnen mit Tunnelböden zur Entfernung von CO₂ und H₂S aus einem mit Ethen und Propen angereicherten Rohgas der Naphthacrackung durch chemische Naßwäsche mit Laugen, sind die Gasdurchtrittsöffnungen mit in Hauben angeordneten Kaminen ausgestattet, wobei die Höhe des jeweiligen Kamins über der Höhe des Schachtaustritts liegt.

## Beschreibung

Die Erfindung betrifft die Verwendung von Absorptionskolonnen zur Entfernung von CO₂ und H₂S aus dem Rohgas der Dampfcrackung.

Das mit Ethen und Propen angereicherte Rohgas wird bekanntlich durch Spaltung von Naphtha-Fraktionen bei Temperaturen zwischen 800 - 900°C und in Gegenwart von Wasserdampf erzeugt.
Das entstandene Rohgas enthält neben den Hauptbestandteilen Ethen und Propen saure Bestandteile als Verunreinigungen, insbesondere CO₂ und H₂S.
Die übliche Methode, um aus dem Rohgas CO₂ und H₂S zu entfernen, sind die Stoffaustauschprozesse in Form von in Absorptionskolonnen durchgeführten chemischen Naßwäschen mit Laugen.

Zum Stoffaustausch Gas/Flüssigkeit werden seit Jahrzehnten Absorptionskolonnen mit Querstromböden und hier insbesondere mit Ventil- beziehungsweise Flachglockenböden eingesetzt.

Charakteristisch für diese Kolonnen ist es, daß sie sich durch relativ hohe Flüssigkeitsstände (Wehrhöhen) kennzeichnen und einen ausreichenden Stoffaustausch zwischen Gas und Flüssigkeit gewährleisten.

Weder die Ventilböden noch die Flachglockenböden verfügen jedoch über Zwangs-hold-up.

Bei derartigen Kolonnen kommt es im Fall von geringer Gasbelastung und gleichzeitig hohen Flüssigkeitsständen zum Durchregnen der Böden.

Es wurde ferner beobachtet, daß Kolonnen mit Ventil- beziehungsweise Flachglockenböden Störungen während der Inbetriebnahme als auch im laufenden Betrieb des Waschprozesses verursachen.
So können sich beispielsweise feste Polymerablagerungen auf den Kolonnenböden bilden, die zu Verstopfüngen im Inneren der Kolonne führen. Durch Zusatz von Additiven brechen zwar diese Ablagerungen auf, jedoch wird dadurch nicht verhindert, daß sich die Kolonneneinbauten immer wieder belegen.

Störungen während der Anfahrphase der Waschkolonnen, die durch instationäre Zustände hervorgerufen werden, wie das Fluten im Ablaufschacht bei den bislang in Laugewäschen eingesetzten Ventilbodenkolonnen, können die Inbetriebnahme beeinträchtigen. Als entgegenwirkende Maßnahme kommt bekanntlich der Einbau von Einlaufwehren auf den Böden zur Anwendung, obwohl diese Maßnahme insbesondere bei Polymerbildung äußerst negative Folgen haben kann (Sedimentation im Ablaufschacht, Verstopfüng des Einlaufkanals).

Es ist daher Aufgabe der Erfindung, bei der Entfernung von CO₂ und H₂S aus dem Rohgas der Naphthacrackung eine Arbeitsweise zur Verfügung zu stellen, die die Vermeidung vorgenannter Nachteile ermöglicht.

Diese Aufgabe wird erfindungsgemäß gelöst, durch die Verwendung von Absorptionskolonnen mit Tunnelböden, deren Gasdurchtrittsöffnungen mit in Hauben angeordneten Kaminen ausgestattet sind, wobei die Höhe des jeweiligen Kamins über der Höhe des Schachtaustritts liegt.

Bei diesen Kolonnenböden ist ein Durchregnen auch bei geringen Gasbelastungen durch den Zwangs-hold-up nicht möglich.

So wird auch bei einer unteren Belastungsgrenze von 40% der Nennlast ein gleichmäßiges Sprudelbild beobachtet.
Dies hat zur Folge, daß die erfindungsgemäß verwendete Absorptionskolonne mit Tunnelböden einen größeren Belastungsbereich aufweist als bislang eingesetzte Ventil- oder Flachglockenböden, der sich zwischen 40 und 125% der Nennlast erstreckt.

Ferner treten instationäre Zustände während der Inbetriebnahme nicht auf. Folgende Betriebszustände sind vor der Inbetriebnahme der Kolonne denkbar:
- Rohgas 125%: - Böden trocken
- Rohgas 40%: - Böden trocken
- Rohgas aus: - Böden gefüllt, Flüssigkeitsumlauf in Betrieb

Die Böden springen bei allen denkbaren Gas/Flüssig-Lastfällen und deren Kombination sofort an.

Es ist erfindungsgemäß vorteilhaft, daß die Gashauben einen U-förmigen Querschnitt aufweisen und unten offen sind.

Durch den U-förmigen Querschnitt der Gashauben wird ein intensiver Stoffübergang erreicht. Die unten offene Ausführungsform der Hauben verhindert die Ablagerung von Feststoffen in denselben. Dadurch wird auch hier die Ausbildung von Strömungstoträumen weitgehend vermieden.

In Weiterbildung des Erfindungsgedankens sind die Absorptionskolonnen mit Zu- und Ableitungen für Gas und Absorptionsflüssigkeit (z.B. KOH) und ohne Einlaufwehre ausgestattet.

Ein besonderer Vorteil der erfindungsgemäßen Verwendung ist es, daß auf die Verwendung von Einlaufwehren verzichtet werden kann. Durch den im Vergleich zu Ventilböden äußerst geringen trockenen Druckverlust werden auch bei nicht gefüllten Böden nahezu keine Kurzschlußströmungen des Gases durch den Ablaufschacht beobachtet. Ein wie bei Ventilböden beobachtetes Aufstauen im Ablaufschacht kann daher bei dieser Bodenform selbst im ungünstigsten Fall nicht eintreten. Sind die Böden mit flüssigkeit gefüllt, ist der Schachtverschluß durch die Kamine gewährleistet. Eine Kurzschlußströmung ist dann unmöglich.

Einlaufwehre sind insbesondere bei Medien, die zu Bildung von festen Ablagerungen neigen, unerwünscht, da es im Bereich des Wehres in Strömungstoträumen zu Ablagerungen des Feststoffes kommen kann. Diese Ablagerungen können dann den gesamten Ablaufschacht verstopfen.

Die Erfindung bezieht sich überdies auf ein Verfahren zur Entfernung von CO₂ und H₂S aus einem mit Ethen und Propen angereicherten Rohgas der Naphthacrackung durch chemische Naßwäsche mit Laugen in Absorptionskolonnen mit Tunnelböden, deren Gasdurchtrittsöffnungen mit in Hauben angeordneten Kaminen ausgestattet sind, wobei die Höhe des jeweiligen Kamins über der Höhe des Schachtaustritts liegt.

Im folgenden sei die erfindungsgemäße Verwendung anhand von schematisch dargestelltem Ausführungsbeispiel erläutert:

Auf Tunnelböden sind Gasdurchtrittsöffnungen im Abstand voneinander angeordnet, welche mit Kaminen 5 vorgesehen sind, wobei über den jeweiligen Kamin 5 unten offene Gashauben 4 mit U-förmigem Querschnitt gestülpt sind. Der sich während des Betriebes einstellende Flüssigkeitsstand wird durch die Höhe des Überlaufwehrs 2, der Flüssigkeitsstand 7 - ohne Flüssigkeitsumlauf - durch die Höhe des Kamins 5 bestimmt.

Das Gas strömt zunächst von unten durch den Kamin 5, wird nach unten umgelenkt und tritt in Form unzusammenhängender Gasblasen durch die auf den Boden befindliche, geschlossene und durch den Überlaufwehr 2 in ihrer Höhe begrenzte Flüssigkeitsphase, was zu einem gleichmäßigen Sprudeln der Flüssigkeit in der Stoffaustauschzone 8 führt.
Die aus der Flüssigkeit austretenden Gasblasen vereinigen sich anschließend mit der darüber befindlichen geschlossenen Gasphase.

Ein Durchregnen der Flüssigkeit wird auch bei geringen Gasbelastungen nicht beobachtet.
Aus diesem Grund kann bei Belastungen von 40% der Nennlast ein gleichmäßiges Sprudelbild aufrechterhalten werden.
Der 125% Lastfall kann bei diesem Boden ebenfalls ohne Probleme realisiert werden.

### Bezugszeichenliste

- 1: Ablaufschacht
- 2.: Überlaufwehr
- 3.: Schachtaustritt
- 4.: Haube
- 5.: Kamin
- 6.: Flüssigkeitsstand bei Betrieb
- 7.: Flüssigkeitsstand ohne Flüssigkeitsumlauf
- 8.: Stoffaustauschzone

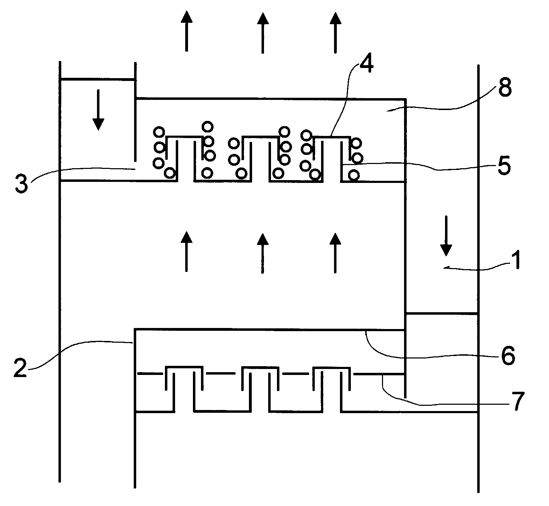

## Patentansprüche

1. Verwendung von Absorptionskolonnen mit Tunnelböden, deren Gasdurchtrittsöffnungen mit in Hauben angeordneten Kaminen ausgestattet sind, wobei die Höhe des jeweiligen Kamins über der Höhe des Schachtaustritts liegt, zur Entfernung von CO₂ und H₂S aus einem mit Ethen und Propen angereicherten Rohgas der Naphthacrackung durch chemische Naßwäsche mit Laugen.

2. Verwendung nach Anspruch 1, dadurch gekennzeichnet, daß die Gashauben einen U-förmigen Querschnitt aufweisen und unten offen sind.

3. Verwendung nach Anspruch 1 und 2, dadurch gekennzeichnet, daß die Absorptionskolonnen mit Zu- und Ableitungen für Gas und Absorptionsflüssigkeit, ohne Einlaufwehre ausgestattet sind.

4. Verfahren zur Entfernung von CO₂ und H₂S aus einem mit Ethen und Propen angereicherten Rohgas der Naphthacrackung durch chemische Naßwäsche mit Laugen in Absorptionskolonnen mit Tunnelböden, deren Gasdurchtrittsöffnungen mit in Hauben angeordneten Kaminen ausgestattet sind, wobei die Höhe des jeweiligen Kamins über der Höhe des Schachtaustritts liegt.
